# EUROPEAN PATENT SPECIFICATION

(11) **EP 2 340 710 B1**
(45) Date of publication and mention of the grant of the patent: **20.03.2013**
(21) Application number: 11157021.4
(22) Date of filing: 11.08.2008
(51) Int. Cl.: A01N 25/04, A01N 25/22, A01N 43/40

(54) **Stable emulsion formulation hindering interaction across the water-oil interface**
Stabile Emulsionsformulierung, die eine Wechselwirkung über die Wasser-Öl-Phasengrenze unterdrückt
Formulation stable sous la forme d'une emulsion, limitant l'interaction à l'interface eau-huile

(30) Priority: 30.08.2007 US 966793 P
(43) Date of publication of application: 06.07.2011
(62) Divisional of application: 08797600.7
(73) Proprietor: Dow AgroSciences, LLC, Indianapolis, Indiana 46268-1054 (US)
(72) Inventor: Liu, Lei, Carmel, IN 46032 (US)
(74) Representative: Dey, Michael

(56) References cited:
- WO-A1-95/07614

## Description

This invention concerns a novel stable emulsion composition that hinders interactions across the oil-water interface between ingredients in the oil phase and those in the aqueous phase.

To design an agricultural formulation product, the most important question to be answered, is its stability. Failure to meet a set of stability requirements which usually depend on the specific market, application and regulations will certainly lead to failure of its commercialization. There are many causes of formulation instabilities, such as a) chemical instabilities due to reactions between ingredients (actives and/or inerts, etc.), photo-degradations, and oxidations, etc., b) physical instabilities due to phase separations (Oswald ripening, crystallization, sedimentations, creamings, etc.) and c) environmental factors (temperature, humidity/moisture, etc.). In today's agrichemical market, it becomes increasingly common to design formulations to contain multiple active ingredients and their required solvents, safeners, and/or adjuvants, etc., in order to achieve the optimal spectrum, efficacy, and delivery efficiency, which consequently makes formulation stability more and more challenging. Therefore, technologies that can effectively isolate, hinder, or eliminate, adverse reactions or interactions between incompatible ingredients are often critical for a successful product.

The oil-in-water (normal) or water-in-oil (reverse/inverse) emulsion is one of the most common formulation types for many agricultural products, where droplets of oil or water stabilized by surfactant emulsifiers as a discrete phase are uniformly dispersed in water or oil media as a continuous phase. However, many challenges may exist, when oil ingredients or oil soluble ingredients may hydrolyze, or react with ingredients in the aqueous phase, or have high enough solubility in water to cause Oswald Ripening, or on the contrary, when water soluble or dispersible ingredients may react with oil ingredients or have high enough oil solubility to cause Oswald Ripening in oil phase. For example, a composition containing triclopyr butoxyethyl ester and the potassium salt of aminopyralid has been found to be extremely useful for the control of brush and woody plants in range and pasture and industrial vegetation management applications. However, in typical emulsion formulations with the oil-soluble ester herbicide and the water-soluble salt herbicide, the triclopyr butoxyethyl ester is susceptible to hydrolysis to the corresponding acid. As a result of the acid formation, the emulsion deteriorates due to crystal formation of both triclopyr and aminopyralid acids. Another example is a composition containing aqueous dispersions of penoxsulam and diflufenican, and methylated seed oil adjuvant that is found to be very useful for cereal herbicidal applications; but diflufenican has enough solubility in oil to cause rapid crystal growth due to Oswald Ripening which results in emulsion destabilization. In both examples, it would be desirable to have a stable emulsion formulation that provides a barrier to hinder or prevent the undesirable interactions between the internal oil phase and the continuous aqueous phase.

WO 95/07614 A1 discloses a two-phase dispersion comprising a continuous aqueous phase and a discontinuous phase comprising a non-aqueous material capable of transport through the aqueous phase to cause Ostwald ripening of the dispersion, wherein the discontinuous phase comprises a stabiliser in an amount sufficient to depress migration of the non-aqueous material through the aqueous phase, and thereby diminish or prevent Ostwald ripening of the dispersion, wherein the stabiliser has a molecular weight of not more than 10,000 and is soluble in the discontinuous phase, but insoluble in and not transportable through the aqueous phase.

The present invention concerns a stable oil-in-water emulsion which comprises:
a) a discrete oil phase comprising oil active ingredients, oil-soluble active ingredients, oil adjuvant or oil solvent, which can react or interact with ingredients in the continuous aqueous phase to cause a physical instability selected from the group consisting of Ostwald ripening; crystallization, sedimentation and creaming;
b) a continuous aqueous phase comprising water, and water soluble or water dispersible ingredients;
c) a first polymeric surfactant comprising an ABA block copolymer having a hydrophilic portion of polyethylene oxide (PEG) and a hydrophobic portion of 12-hydroxystearic acid in an amount from 1 g/L to 200 g/L, and a second polymeric surfactant comprising a polyalkylene glycol ether in an amount from 1 g/L to 200 g/L; and
d) optionally, other inert formulation ingredients.

The application further discloses a method of using the stable oil-in water emulsion and optionally diluting it in an aqueous spray mixture for agricultural applications, such as weed management, plant disease management, or insect pest management.

This invention provides an oil-in-water emulsion stabilized by a mixture of polymeric surfactants that hinders or prevents adverse interactions and reactions between ingredients of the discrete oil phase and those of the continuous aqueous phase, which may lead to physical instabilities of the composition.

The oil phase contains water immiscible components, such as solvents, liquid actives, oil soluble actives, adjuvants or other desirable ingredients that are essentially water immiscible. In a typical oil-in-water emulsion, the oil phase forms discrete droplets stabilized by emulsifiers that are suspended in a continuous aqueous phase. Interactions or reactions of the components in oil phase with those in aqueous phase include, but are not limited to, hydrolysis of a component in the oil phase, or degradation of a component in oil phase that is caused by the presence of other components in aqueous phase, or crystal formation and growth (Oswald Ripening) in the aqueous phase from a component in the oil phase due to its relatively high water solubility.

Oil miscible, oil soluble, or oil dispersible agricultural actives that can potentially undergo hydrolysis include, but are not limited to, esters of carboxylate, phosphate, or sulfate pesticides, including benzoic acid herbicides such as dicamba esters, phenoxyalkanoic acid herbicides such as 2,4-D, MCPA or 2,4-DB esters, aryloxyphenoxypropionic acid herbicides such as clodinafop, cyhalofop, fenoxaprop, fluazifop, haloxyfop and quizalofop esters, and pyridinecarboxylic acid herbicides such as fluroxypyr and triclopyr esters, and insecticides such as chlorpyrifos, chlorpyrifos-methyl, and fungicides such as dinocap, kresoxim-methyl, etc.

Oil miscible, oil soluble, or oil dispersible agricultural actives that have high enough water solubilities (c.a. >60 ppm) and high enough melting point to be a solid at ambient condition, and can potentially result in crystal formation and growth in the aqueous phase due to Oswald Ripening include, but limited to, spinosad, spinetoram, imidacloprid, propanil, cyproconazole, acetamiprid, amicarbazone, amidosulfuron, asulam, bentazone, carbaryl, cymoxanil, dicamba, florasulam, myclobutanil, nitrapyrin, picloram, propiconazole, prosulfuron, prothioconazole, pymetrozine, sulfosulfuron, triclopyr, tricyclazole, malathion, diflufenzopyr, etc.

Optionally, oils used for solvent, diluent, or adjuvant purposes include, but are not limited to, petroleum fractions or hydrocarbons such as mineral oil, aromatic solvents, xylene, paraffinic oils, and the like; vegetable oils such as soy bean oil, rape seed oil, olive oil, castor oil, sunflower seed oil, coconut oil, corn oil, cotton seed oil, linseed oil, palm oil, peanut oil, safflower oil, sesame oil, tung oil and the like; esters of the above vegetable oils; esters of monoalcohols or dihydric, trihydric, or other lower polyalcohols (4-6 hydroxy containing), such as 2-ethyl hexyl stearate, n-butyl oleate, isopropyl myristate, propylene glycol dioleate, di-octyl succinate, di-butyl adipate, di-octyl phthalate and the like; esters of mono, di and polycarboxylic acids and the like.

For a formulation concentrate which may be further diluted at point of use, the discrete oil phase may range from 1 g/L to 800 g/L, preferably 10 g/L to 500 g/L, of the total composition. It is commonly known that this concentrated formulation may be diluted from 1 to 2000 fold at point of use depending on the agricultural practices.

The aqueous phase contains water as the solvent medium, and optionally water soluble or water dispersible active ingredients. Typically, water in the aqueous phase of the emulsion formulation is used to balance the final composition. Interactions or reactions of an ingredient in the aqueous phase with component(s) of the oil phase include, but are not limited to, crystal formation and growth due to Oswald Ripening of an aqueous dispersed component in oil phase, or degradation of a component in aqueous phase that is caused by the presence of a component in oil phase.

Water dispersible or water soluble actives that have high enough solubility (> 60 ppm) in oil phase, and have high enough melting point to be a solid at ambient condition, can potentially cause crystal formation and growth due to Oswald Ripening in the oil phase. Unlike aqueous phase, oil phase can comprise any combinations of oil solvents, oil actives, and/or oil soluble actives or adjuvants in which the solubility of an aqueous component may vary significantly on a case by case basis. For example, diflufenican has > 10000 ppm solubility in methylated seed oils, spinosad or spinetoram has >10000 ppm solubilities in petroleum based oils, bitertanol has >1000 ppm solubilities in paraffinic or aromatic oils, penoxsulam has >1000 ppm solubilities in acetochlor, etc. For a given oil phase which is often designed to meet specific market, customer, or application needs, actives or other components in aqueous phase can form and grow large crystals in oil phase due to high solubilities and Oswald Ripening, and result in emulsion destabilization.

Degradation of a component in oil or aqueous phase that is caused by the presence of a component in its opposite aqueous or oil phase is also case by case depending on the specific composition. For example, chlorpyrifos-methyl in an oil phase would degrade when spinosad or spinetoram is present in aqueous phase, γ-Cyhalothrin in oil phase would degrade when spinosad or spinetoram is present in aqueous phase. Florasulam in oil phase or aqueous phase would degrade in the presence of amine or alkaline functionalities in the opposite phases. Dinocap or meptyl-dinocap in oil phase would degrade when triazole compounds or alkaline chemicals are present in aqueous phase.

The first polymeric surfactant is comprised of an ABA block copolymer having a hydrophilic portion of polyethylene oxide (PEG) and a hydrophobic portion of 12-hydroxystearic acid. A preferred example of such a polymeric surfactant is the commercial surfactant Atlox^{™} 4912 (trademark of Uniqema), having a molecular weight of 5,000. Another example of such a polymeric surfactant is the commercial surfactant Termul^{™} 2510 (trademark of Huntsman). The first polymeric surfactant is present in an amount from 1 g/L to 200 g/L, preferably from 10 g/L to 100 g/L.

The second polymeric surfactant is comprised of a polyalkylene glycol ether. A preferred example of such a polymeric surfactant is the commercial surfactant Atlas^{™} G-5000 (EO-PO block copolymer; trademark of Uniqema). Another example of such a polymeric surfactant is the commercial surfactant Termul^{™} 5429 (alcohol alkoxylate; trademark of Huntsman). The second polymeric surfactant is present in an amount from 1 g/L to 200 g/L, preferably from 10 g/L to 100 g/L.

In a typical procedure for preparing the oil-in-water emulsion of the present invention, the aqueous phase is prepared by mixing water with water soluble or water dispersible ingredients including, but not limited to, actives, surfactant (polyalkylene glycol ether, e.g., Atlas G-5000), and optionally other inert ingredients such as thickeners, pH buffer, dispersant, wetting agent, biocide, etc. In case of a water-insoluble solid active (e.g. diflufenican, penoxsulam), the solid materials may be milled to a desirable size range (e.g. 0.1-10 µm) and preferably pre-dispersed in a concentrated aqueous dispersion with the help of wetting and dispersing agents. There are many commercially available milling and dispersing processes and equipment that can be used for this purpose which are well known to those skilled in the art. The oil phase is prepared by mixing the oil-soluble ABA block copolymer having a hydrophilic portion of polyethylene oxide (PEG) and a hydrophobic portion of 12-hydroxystearic acid (e.g., Atlox 4912) with oil miscible or soluble ingredients, including but not limited to, oil solvents, oil actives, oil soluble actives, oil adjuvants, oil safeners, etc. The final emulsion formulation is prepared by slowly adding the oil phase into the aqueous phase under high shear homogenization until the desired emulsion droplet size (0.1-10 µm) is achieved

An example of an emulsion in which the physical instability is crystal growth due to Oswald Ripening comprises:
a) a discontinuous oil phase comprising from 1 g/L to 700 g/L of methyl soyate;
b) a continuous aqueous phase comprising a dispersion of from 1g/L to 500 g/L of penoxsulam, from 1 g/L to 500 g/L of diflufenican and from 200 g/L to 990 g/L of water;
c) from 1 g/L to 200 g/L of a first polymeric surfactant comprising an ABA block copolymer having a hydrophilic portion of polyethylene oxide (PEG) and a hydrophobic portion of 12-hydroxystearic acid, and from 1 g/L to 200 g/L of a second polymeric surfactant comprising a polyalkylene glycol ether; and
d) optionally, other inert formulation ingredients.

In addition to the compositions and uses set forth above, the present invention also embraces the composition and use of these emulsions in combination with one or more additional compatible ingredients. Other additional ingredients may include, for example, one or more other pesticides, dyes, and any other additional ingredients providing functional utility, such as, for example, stabilizers, fragrants, viscosity-modifying additives, suspension aids, dispersants, and freeze-point depressants.

### Example Stability of diflufenican in the presence of methyl soyate

Seven oil-in-water emulsions containing 5 wt percent diflufenican, 0.75 wt percent penoxsulam in aqueous suspension, 5 wt percent propylene glycol, 37.5 wt percent methyl soyate as penoxsulam adjuvant in the oil phase, and the surfactants as listed in Table 1 were prepared and tested for freeze-thaw stability after storage under -10°C/40°C with 24-hour cycle. Due to its relative high solubility in methyl soyate (>1% by wt), diflufenican has strong tendency to undergo Oswald Ripening causing crystallization and crystal growth, which eventually destabilizes the formulation. The stability results are summarized in Table 1. Sample 5 showed significantly better stability under storage conditions than the other six samples which indicated that the combination of polymeric surfactants, Atlox 4912 and Atlas G-5000, formed a much denser, tighter and rigid interface that hindered the transportation and diffusion of diflufenican across the interface, and limited Oswald ripening that would lead to crystallization and crystal growth. As a result, sample 5 stayed stable for >6 weeks under accelerated storage conditions while the other six formulations destabilized and had crystal growth in 2 weeks.

**Table 1. Stability of Diflufenican in Presence of Methyl Soyate**

| | | | | | | | | | |
|---|---|---|---|---|---|---|---|---|---|
| | | | | | Stability Observation | | | | |
| Sample ID | Surfactant #1 | % Conc. Surfactant #1 | Surfactant #2 | % conc. Surfactant #2 | 0 weeks | 54 °C after 2 weeks | FT* after 2 weeks | 54°C after 6 weeks | FT* after 6 weeks |
| 1 | Emgard 2033-C | 6.62% | none | 0.00% | Stable emulsion | Stable emulsion | Stable emulsion but DFF crystals growth | Stable Emulsion | Stable emulsion but severe DFF crystal growth |
| 2 | Cognis 33851 | 6.62% | none | 0.00% | Stable emulsion | Phase Separation | Phase separation with severe DFF crystal growth | N/A | N/A |
| 3 | Tensiofix N9811HF | 4.96% | Tensiofix N9824HF | 1.66% | Stable emulsion | Phase Separation | Phase separation with severe DFF crystal growth | N/A | N/A |
| 4 | Atlox 4914 | 2.65% | Atlas G-5000 | 3.97% | Stable emulsion | Stable emulsion | Stable emulsion but DFF crystals growth | Stable Emulsion | Phase separation with severe DFF crystal growth |
| 5 | Atlox 4912 | 3.31% | Atlas G-5000 | 3.31% | Stable emulsion | Stable emulsion | Stable emulsion | Stable emulsion | Stable emulsion |
| 6 | Amsul DMAP 60 | 3.31% | T-Det C-40 & Atlas G-5000 | 1.32% & 1.99% | Stable emulsion | Phase Separation | Stable emulsion but DFF crystals growth | Phase Separation | Stable emulsion but severe DFF crystal growth |
| 7 | Celvol 205 | 2.40% | none | 0.00% | Stable emulsion | Stable emulsion | Phase separation with DFF crystal growth | Stable Emulsion | Phase separation with severe DFF crystal growth |

| | | | | | | | | | |
|---|---|---|---|---|---|---|---|---|---|
| All samples contain: 37.5% methyl soyate, 5% propylene glycol, 5% Diflufenican (DFF), 0.75% penoxsulam, water and other common inert ingredients as balance. * FT refer to Freeze/Thaw, 24 hour cycle between -10°C and 40°C. | | | | | | | | | |

## Claims

1. A stable oil-in-water emulsion which comprises:
a) a discrete oil phase comprising oil active ingredients, oil-soluble active ingredients, oil adjuvant or oil solvent, which can react or interact with ingredients in the continuous aqueous phase to cause a physical instability selected from the group consisting of Ostwald ripening, crystallization, sedimentation and creaming;
b) a continuous aqueous phase comprising water, and water soluble or water dispersible ingredients;
c) a first polymeric surfactant comprising an ABA block copolymer having a hydrophilic portion of polyethylene oxide (PEG) and a hydrophobic portion of 12-hydroxystearic acid in an amount from 1 g/L to 200 g/L, and a second polymeric surfactant comprising a polyalkylene glycol ether in an amount from 1 g/L to 200 g/L; and
d) optionally, other inert formulation ingredients.

2. The emulsion of Claim 1 in which the physical instability is crystal growth due to Oswald Ripening.

3. The emulsion of Claim 2 which comprises:
a) a discontinuous oil phase comprising from 1 g/L to 700 g/L of methyl soyate;
b) a continuous aqueous phase comprising a dispersion of from 1 g/L to 500 g/L of penoxsulam, from 1 g/L to 500 g/L of diflufenican and from 200 g/L to 990 g/L of water;
c) from 1 g/L to 200 g/L of a first polymeric surfactant comprising an ABA block copolymer having a hydrophilic portion of polyethylene oxide (PEG) and a hydrophobic portion of 12-hydroxystearic acid, and from 1 g/L to 200 g/L of a second polymeric surfactant comprising a polyalkylene glycol ether; and
d) optionally, other inert formulation ingredients.

## Patentansprüche

1. Stabile ÖI-in-Wasser Emulsion, welche umfasst:
a) eine separate Ölphase umfassend Öl-aktive Inhaltsstoffe, Öllösliche aktive Inhaltsstoffe, Öl-Adjuvanz oder Öl-Lösungsmittel, welche mit Inhaltsstoffen in der kontinuierlichen wässrigen Phase reagieren oder interagieren kann um eine physikalische Instabilität ausgewählt aus der Gruppe bestehend aus Ostwald-Reifung, Kristallisation, Sedimentation und Aufrahmung zu verursachen;
b) eine kontinuierliche wässrige Phase umfassend Wasser und wasserlösliche oder wasserdispergierbare Inhaltsstoffe;
c) ein erstes polymeres Tensid umfassend ein ABA-Block-Copolymer, welches einen hydrophilen Anteil von Polyethylenoxid (PEG) und einen hydrophoben Anteil von 12-Hydroxystearinsäure in einer Menge von 1 g/L bis 200 g/L aufweist und ein zweites polymeres Tensid umfassend ein Polyalkylen-Glykolether in einer Menge von 1 g/L bis 200 g/L; und
d) gegebenenfalls andere inerte Formulierungs-Inhaltsstoffe.

2. Emulsion nach Anspruch 1, in welcher die physikalische Instabilität Kristallwachstum aufgrund von Ostwald-Reifung ist.

3. Emulsion nach Anspruch 2, welche umfasst:
a) eine diskontinuierliche Öl-Phase umfassend von 1 g/L bis 700 g/L Methylsoyat *(englisch: methyl soyate);*
b) eine kontinuierliche wässrige Phase umfassend eine Dispersion von 1 g/L bis 500 g/L Penoxsulam, von 1 g/L bis 500 g/L Diflufenican und von 200 g/L bis 990 g/L Wasser;
c) von 1 g/L bis 200 g/L eines ersten polymeren Tensids umfassend ein ABA-Block-Copolymer, welches einen hydrophilen Anteil von Polyethylenoxid (PEG) und einen hydrophoben Anteil von 12-Hydroxystearinsäure, und von 1 g/L bis 200 g/L eines zweiten polymeren Tensids umfassend ein Polyalkylen-Glykolether; und
d) gegebenenfalls andere inerte Formulierungs-Inhaltsstoffe.

## Revendications

1. Emulsion huile dans l'eau stable qui comprend:
a) une phase huileuse discrète comprenant des ingrédients actifs huileux, des ingrédients actifs solubles dans l'huile, un adjuvant huileux ou un solvant huileux, qui peuvent réagir ou interagir avec les ingrédients présents dans la phase aqueuse continue pour provoquer une instabilité physique choisie dans le groupe constitué par le mûrissement d'Oswald, la cristallisation, la sédimentation et l'écrémage;
b) une phase aqueuse continue comprenant de l'eau et des ingrédients solubles dans l'eau ou pouvant être dispersés dans l'eau;
c) un premier tensioactif polymère comprenant un copolymère séquencé ABA comportant un segment hydrophile de poly(oxyde d'éthylène) (PEG) et un segment hydrophobe d'acide 12-hydroxystéarique dans une quantité de 1 g/L à 200 g/L, et un deuxième tensioactif polymère comprenant un éther de polyalkylène-glycol dans une quantité de 1 g/L à 200 g/L; et
d) éventuellement, d'autres ingrédients de formulation inertes.

2. Emulsion selon la revendication 1 dans laquelle l'instabilité physique est une croissance cristalline due à un mûrissement d'Oswald.

3. Emulsion selon la revendication 2 qui comprend:
a) une phase huileuse discontinue comprenant de 1 g/L à 700 g/L d'ester méthylique d'huile de soja;
b) une phase aqueuse continue comprenant une dispersion de 1 g/L à 500 g/L de pénoxsulame, de 1 g/L à 500 g/L de diflufénican et de 200 g/L à 990 g/L d'eau;
c) de 1 g/L à 200 g/L d'un premier tensioactif polymère comprenant un copolymère séquencé ABA comportant un segment hydrophile de poly(oxyde d'éthylène) (PEG) et un segment hydrophobe d'acide 12-hydroxystéarique, et de 1 g/L à 200 g/L d'un deuxième tensioactif polymère comprenant un éther de polyalkylène-glycol; et
d) éventuellement, d'autres ingrédients de formulation inertes.
